# EUROPEAN PATENT SPECIFICATION

(11) **EP 0 409 620 B1**
(45) Date of publication and mention of the grant of the patent: **29.11.1995**
(21) Application number: 90307904.4
(22) Date of filing: 19.07.1990
(51) Int. Cl.: H04N 9/31

(54) **A projection type color image display device**
Farbbildprojektionsvorrichtung
Dispositif d'affichage d'image en couleur du type par projection

(30) Priority: 20.07.1989 JP 189531/89
(43) Date of publication of application: 23.01.1991
(73) Proprietor: SHARP KABUSHIKI KAISHA, Osaka 545 (JP)
(72) Inventor: Hamada, Hiroshi, Nara-shi, Nara-ken (JP); Funada, Fumiaki, Yamatokoriyama-shi, Nara-ken (JP)
(74) Representative: Brown, Kenneth Richard

(56) References cited:
- EP-A- 0 188 804
- US-A- 4 722 593
- US-A- 4 796 978
- PATENT ABSTRACTS OF JAPAN, vol. 12, no. 130 (E-603), 21st April 1988 & JP-A-62 254 589
- PATENT ABSTRACTS OF JAPAN, vol. 13, no. 57 (P-825), 9th February 1989 & JP-A-63 247 720
- PATENT ABSTRACTS OF JAPAN, vol. 13, no. 222 (P-876)[3570], 24th May 1989 & JP-A-1 035 416
- PATENT ABSTRACTS OF JAPAN, vol. 13, no. 344 (E-797)[3692], 3rd August 1989 & JP-A-1 103 390

## Description

### BACKGROUND OF THE INVENTION

### 1. Field of the invention:

The present invention relates generally to a display device, and more particularly to a projection type display device for displaying a projected color image through lenses from transmission display panels such as liquid crystal display panels wherein the color image contains multiple picture elements arranged in a matrix. This type of display device is applicable to a large-screen projection TV (television), information display systems and the like.

### 2. Description of the prior art:

The display panels used in the present invention do not illuminate themselves, but their transmissibility varies in response to a driving signal so as to display images and/or characters by modulating the intensity of light from a source of light. Examples of such display panels include liquid crystal display panels, electrochromic displays, display units using transparent ceramics such as PLZT, among which the liquid crystal display panels are most widely used for pocket-size TV and word processors. By taking the liquid crystal display panels as an example, the background of the present invention will be described:

The commonly called "matrix type liquid crystal display panel" contains picture elements arranged in a matrix that are individually driven by driving voltages so as to change the optical characteristics of the liquid crystal so as to make up images and/or characters. Voltage can be applied to the individual picture elements in various manners, for example, by a simple matrix system or alternatively, by an active matrix system under which a non-linear two-terminal element such as MIM (metal-insulating layer-metal) or three-terminal switching element is disposed for each picture element. The present invention can be applied to each of these systems, but the greatest effect is achieved when it is applied to the active matrix system.

There are at least two manners in which the transmissive type display panels can be observed; one is to directly observe the display panel, and the other is to observe a projected image enlarged through a lens. The present invention falls in the latter projection type, which represents images in three primary colors through irradiation with red, yellow and blue light, and composes these images so as to pass the composed image through the same optical path, and project it through the same projection lens.

As is the case with most conventional motion picture projectors and slide projectors, the projection type liquid crystal display devices use Köhler's illumination. To use this illumination, the optical system is constructed so that an image from the source of light through a condenser lens is made up on a projection lens so as to minimize the diameter of the projection lens. If this optical system is employed to construct a projection type display device, difficulty is likely to occur in optically aligning several images, particularly those of three primary colors on display panels. The defect of non-alignment occurs unless the three lenses are exactly aligned. In addition, the light is converged from the condenser lens toward the projection lens, thereby differentiating the angles of incidence to the display panels depending upon the position of the display panels. This is likely to produce unequal contrast between the upper part and the lower part of an image when a display panel is used such as a liquid crystal panel which depends upon an angle at which the image is observed.

To solve this problem, Japanese Laid-open Patent Publication (Kokai) JP-A-602916 discloses an optical system in which the liquid crystal display panel is illuminated with substantially parallel lights and an image is projected through a single projection lens. However, this device involves the following problems:
(1) The device requires a projection lens having a larger diameter than the display panel.
(2) A large distortion aberration is likely to occur because of the parallel use of the projection lens and the single lens. To reduce the distortion aberration, a considerably complex arrangement of projection lenses must be used. This results in the increased production cost.

The active matrix system must employ signal lines between picture elements so as to drive a non-linear two-terminal element such as MIM (metal-insulating layer-metal) or three-terminal switching element such as TFT (thin film transistor) disposed for each picture element. The provision of signal lines requires spaces, but the allowed space is limited in view of the electric performance and manufacturing convenience. If the picture element pitches are excessively minimized, the degree of aperture or aperture percentage (the ratio of an effective opening occupied by each picture element or an area for allowing the passage of light to the total area) is reduced, thereby darkening the image even though a bright light is used.

US-A-4796978 discloses a colour projection type LCD display in which parallel beams of light are applied to respective LCD panels of the colours red, green and blue, with images therefrom being combined using dichroic mirrors to form a composite colour image.

### SUMMARY OF THE INVENTION

The projection type color image display device of this invention, which overcomes the above-discussed and numerous other disadvantages and deficiencies of the prior art, comprises: three display panels; a light generating means for generating parallel rays of light; a means for separating the parallel rays of light into three kinds of parallel rays of light and for directing the separated rays to each respective display panel; a first lens group comprising sub-lenses for converging rays of light from a respective display panel at a point and a composing means for composing an image; and a second lens group disposed near said point for projecting the composed image onto a screen, characterized by a microlens array including a plurality of microlenses disposed over an incident surface of each of the display panels, each microlens having a focus point and converging the parallel rays of light on its focus point so as to pass through a corresponding opening of a picture element of a display panel, wherein the sub-lenses have a larger area than that of the respective display panel, and the area of the entrance pupil of the second lens group is equal to or larger than the area of light projected thereon by a respective microlens, and wherein the three kinds of parallel rays respectively have primary colors of red, green and blue.

In a preferred embodiment, each of the sub-lenses of the first lens group comprises a plano-convex lens arranged with its flat side facing incident light from a source of light.

In another preferred embodiment, the means for separating the parallel rays into three kinds of parallel rays comprises two dichroic mirrors and one mirror having no selectability of wavelengths.

Thus, the invention described herein makes possible the objectives of providing a projection type color image display device (1) which is capable of representing equal contrast of color image throughout the screen, (2) which allows easy adjustment of relative positions among the display panels, and (3) which has an enhanced effective aperture ratio with the use of microlens arrays; thereby securing bright representation of images.

The first lens group including lens subgroups for the respective display panels and the second lens group constitute a telecentric system.

A microlens array composed of microlenses or lenticular lenses is disposed for each of the display panels toward the source of light. The positions and focal lengths of the microlens arrays are determined so that the rays passing therethrough meet in the openings of picture elements of the panels. Normally three display panels are disposed for three primary colors of red, blue and green, but when two of the primary colors are mixed, two display panels suffice. For explanatory convenience, the following embodiment has three display panels corresponding to three primary colors.

One of the features of the present invention is that the images of the display panels are optically composed and then they are projected on a screen through a common projection lens, which is different from known display devices, such as that disclosed in Japanese Laid-open Patent Publication (Kokai) No. 61-167297. Another feature of the present invention is that the microlens arrays are disposed for each panel as field lenses. Japanese Laid-open Patent Publication (Kokai) JP-A-61177079 and JP-A-6242182 disclose one field lens which is located backward of where the images are composed but these fail to disclose the feature of the present invention.

The display device of the present invention has an optical system under which the display panels are illuminated with light whose principal rays are optically parallel with each other. The rays of light are converged by the microlens array so that they are passed through the openings of the picture elements. The display panels receive the incident rays optically parallel, thereby eliminating the possibility of causing undesirable moire effects.

The rays expand within a conical shape which has a top angle ϑ of tan⁻¹ (radius of microlens/focal length of microlens). The rays passing through the center of each microlens straightly advance, called "source rays". These main rays are converged through the first lens group at a back focal point, and enter the second lens group which function as a field lens. All the rays passing through the microlenses expand in a range identified by the distance between the display panel and the projection lens x tan ϑ , which means that it expands beyond the diameter of the projection lens, thereby requiring that the diameter of the projection lens is enlarged. This is equal to the condition, that is, the focal length (F) of the projection lens ≦ the focal length (F) of the microlens.

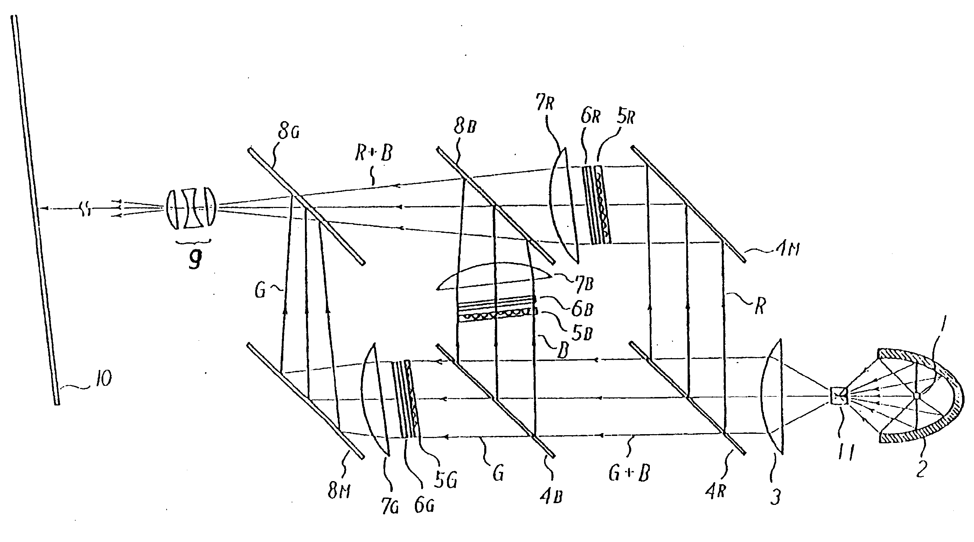

### BRIEF DESCRIPTION OF THE DRAWING

This invention may be better understood and its numerous objects and advantages will become apparent to those skilled in the art by reference to the accompanying drawing as follows:

The drawing is a diagrammatic view showing an optical system incorporated in the embodiment according to the present invention.

### DESCRIPTION OF THE PREFERRED EMBODIMENTS

Referring to the drawing, there is provided a source of white light 1 such as a halogen lamp, a metal halide lamp, a xenon lamp. A filter can be disposed against the source of light 1 so as to cut ultraviolet and infrared ray if the liquid crystal display panels are unfavorably affected by them.

There is provided a spheroidal mirror 2 and the source of light 1 is placed on a first focus of the spheroidal mirror 2, and the light converges on a second focus thereof. If necessary, a cold mirror can be used for the reflecting side so that visual light is reflected and infrared ray is passed. An integrator 11 is disposed adjacent to the second focus so that the angular distribution of light is made even. The reference numeral 3 denotes a condenser lens disposed in such a manner that its front focus and the center of the integrator 11 are aligned. Thus, the optically parallel light flux is obtained from the source light (to be exact, principal rays, which are emitted from the center of the integrator 11) and liquid crystal display panels are illuminated with the light flux. This construction is based on the same idea underlying the optical system used in the solar simulator and an exposer. The optically parallel light flux can be obtained by any other method such as by use of a combination of a condenser lens with a spherical mirror or a paraboloid mirror.

There are provided dichroic mirrors 4R and 4B that selectively reflect red and blue light, respectively, and the white parallel light flux is separated into three primary colors. The reference numeral 4M denotes a mirror which is incapable of selecting colors. Under this arrangement each display panel receives the respective optically parallel light flux, thereby forming an image in three colors.

There are provided micro-lens arrays 5R, 5G and 5B having distributed refraction indexes which are produced by an ion exchange method. The pitches between the adjacent lenses are the same with those between the picture elements of the liquid crystal display panels. In the example the diameter of each lens was 160 »m. The focal length was determined to be 720 »m in air and 1.1 mm in a glass substrate having a refractive index (n=1.53), equal to the thickness thereof. They were bonded to the front faces of liquid crystal display panels 6R, 6G, and 6B with ultra-violet sensitive adhesive. The micro-lens array is disclosed in Japanese Patent Application filed on October 26, 1988 by the same applicant.

The liquid crystal display panels 6R, 6G, and 6B represent red, green and blue image, respectively. The display area has a diagonal of 75 mm, and the picture element pitch is 190 »m (longitudinal) x 161 »m (lateral). The picture element has an opening of 88 »m (longitudinal) and 88 »m (lateral), having an aperture ratio of 30%. The liquid crystal is operated in a twisted nematic mode, and an active matrix system was adopted which is driven by a thin film transistor employing amorphous silicone.

There are first lens groups 7R, 7G and 7B disposed for each panel, functioning as a field lens and employing plano-convex lenses having a focal length of 200 mm, and a diameter of 80 mm. The light forming an image in three primary colors is focussed by these lenses, and the images in three colors are optically composed by the dichroic mirrors 8G and 8B that selectively reflect green and blue light. The reference numeral 8M denotes a mirror which is incapable of selecting wavelengths. Each lens 7R, 7G and 7B is arranged so that the back focal points thereof coincide with each other. Thus, if the liquid crystal display panels are viewed from the position of the projection lens, one can see virtual images in three primary colors coinciding with each other at the same position and in the same size. Each of these lenses 7R, 7G and 7B, provided that it can focus light, can be a bi-convex lens, a plano-convex lens, or a meniscus convex lens but it is necessary to design the lens so as to minimize aberration as a whole.

Each of the lenses 7R, 7G and 7B is constructed with a complex lens such as an achromatic lens or apochromatic lens having a single lens or two or more lenses or a non-spherical lens or a combination thereof.

The composed color image is projected through a projection lens 9 on a screen 10. The projection lens 9 employed was a commercial lens for a large-screen slide projector where f=200 mm and F=4.5. The number of F is the same as the F number of the micro-lens, that is, F=720/160, so that the light diverging through the micro-lenses in a conical shape is caught by the entrance pupil of the projection lens 9, which can be a type in ordinary use such as those for slide projectors and cameras. If necessary, additional lenses can be used by varying relative positions among them so as to construct a zoom lens whereby the focal lengths of all the projection lenses are varied.

An experiment demonstrated that when the lenses 7R, 7G and 7B were spaced 40 mm from the respective liquid crystal display panels, and 200 mm from the projection lens, a virtual image of the display panels was formed by the field lenses 7R, 7G and 7B, and the virtual image, which was enlarged five times, was projected onto the screen placed at a point 1000 mm backward of the projection lens. When the field lenses 7R, 7G and 7B were placed at a distance of 170 mm from the projection lens, the virtual image was enlarged 10 times and projected onto the screen placed at a point 2200 mm backward of the projection lens.

Under the optical system of the present invention one advantage is that when the display panels are placed at positions deviated forward or backward from the point of focus, the magnification does not vary but only obscurity in image is likely to occur, thereby facilitating the aligning of the three display panels. Another advantage is that no substantial distortion aberration occurs. To demonstrate this desirable effect, a comparative experiment was conducted by using a plano-convex lens having a focal length of 200 mm and a diameter of 100 mm as a projection lens without the field lens and projecting an image onto a screen. The experiment indicated that a fatal pincushion distortion was discerned. A further advantage is that the projected image under the arrangement of the micro-lens array is roughly twice as bright as when it is not used.

The arrangement of the dichroic mirror and the display panels is not limited to the illustrated embodiment, but it can be variously changed provided that the lengths of optical paths between the display panels and the projection lens are equal. Preferably, the lengths of optical path between the source of light and the display panels are equal. This ensures that the distributions of illumination on the display panels are similar, which means that no uneven "white balance" occurs in the light intensity of three primary colors. The angle of incidence to the dichroic mirror is usually 45° but it can be made smaller than 45°. In some cases the smaller angle of incidence offers an advantage in that the color separation of the dichroic mirror is facilitated and the components of the optical system are more easily designed.

Instead of the dichroic mirror, a dichroic prism or a combination of it with the dichroic mirror can be employed in the form of letter X.

Each display panel has its own optimum angle at which the image thereon can be observed in its best state, but this angle sometimes deviates with respect to the normal of the respective display panel. In such a case, the panels may be adjusted by declining against the illumination. According to the present invention, the adjustment can be easily made by placing the normals of the display panels, the optical axis of the projection lens, and the normal of the projection screen in parallel. This ensure that no keystone distortion occurs.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A projection type color image display device comprising: three display panels (6R, 6G, 6B); a light generating means (1,3,11) for generating parallel rays of light; a means (4R, 4B, 4M) for separating the parallel rays of light into three kinds of parallel rays of light and for directing the separated rays to each respective display panel (6R, 6G, 6B); a first lens group comprising sub-lenses (7R, 7G, 7B) for converging rays of light from a respective display panel (6R, 6G, 6B) at a point and a composing means (8M, 8G, 8B) for composing an image; and a second lens group (9) disposed near said point for projecting the composed image onto a screen, characterized by a microlens array (5R, 5G, 5B) including a plurality of microlenses disposed over an incident surface of each of the display panels (6R, 6G, 6B), each microlens having a focus point and converging the parallel rays of light on its focus point so as to pass light through a corresponding opening of a picture element of a display panel (6R, 6G, 6B), wherein the sub-lenses have a larger area than that of the respective display panel (6R, 6G, 6B), and the area of the entrance pupil of the second lens group (9) is equal to or larger than the area of light projected thereon by a respective microlens, and wherein the three kinds of parallel rays respectively have primary colors of red, green and blue.

2. A projection type color image display device according to claim 1, wherein the sub-lenses (7R, 7B, 7G) comprise plano-convex lenses (7R, 7G, 7B) arranged with their flat sides facing a respective display panel (6R, 6G, 6B) so as to receive incident light from the light generating means (1).

3. A projection type color image display device according to claim 1 or claim 2, wherein the composing means (8M, 8G, 8B) comprises two dichroic mirrors (8G, 8B) and one mirror (8M) having no selectability of wavelengths.

4. A projection type color image display device according to any one of claims 1 to 3, wherein each microlens array (5R, 5G, 5B) is parallel with a respective display panel (6R, 6G, 6B) and the light is incident upon the microlens array (5R, 5G, 5B) at an angle with respect to the normal to a respective display panel (6R, 6G, 6B).

5. A projection type color image display device according to any one of the preceding claims wherein the means (4R, 4B, 4M) for separating the parallel rays of light into three kinds of parallel rays of light includes two dichroic mirrors (4R, 4B) which supply red, green and blue light respectively to each respective display panel (6R, 6G, 6B).

## Patentansprüche

1. Farbbild-Projektionsanzeigevorrichtung mit: drei Anzeigetafeln (6R, 6G, 6B); einer Lichterzeugungseinrichtung (1, 3,11) zum Erzeugen paralleler Lichtstrahlen; einer Einrichtung (4R, 4B, 4M) zum Aufteilen der parallelen Lichtstrahlen in drei Arten paralleler Lichtstrahlen und zum Hinlenken der abgeteilten Strahlen auf eine jeweilige Anzeigetafel (6R, 6G, 6B); einer ersten Linsengruppe mit Unterlinsen (7R, 7G, 7B) zum Konvergieren von Lichtstrahlen von einer jeweiligen Anzeigetafel (6R, 6G, 6B) auf einen Punkt, und einer Zusammensetzeinrichtung (8M, 8G, 8B) zum Zusammensetzen eines Bilds; und einer zweiten Linsengruppe (9), die nahe dem genannten Punkt angeordnet ist, um das zusammengesetzte Bild auf einen Schirm zu projizieren; **gekennzeichnet durch** ein Mikrolinsenarray (5R, 5G, 5B) mit mehreren über der Eintrittsfläche jeder der Anzeigetafeln (6R, 6G, 6B) angeordneten Mikrolinsen, wobei jede Mikrolinse einen Brennpunkt aufweist und die parallelen Lichtstrahlen auf ihren Brennpunkt konvergiert, um Licht durch eine zugehörige Öffnung eines Bildelements einer Anzeigetafel (6R, 6G, 6B) hindurchzuleiten, wobei die Unterlinsen eine größere Fläche als die jeweilige Anzeigetafel (6R, 6G, 6B) aufweisen und die Fläche der Eintrittspupille der zweiten Linsengruppe (9) der Fläche des durch eine jeweilige Mikrolinse darauf projizierten Lichts entspricht oder größer ist als diese Fläche, und wobei die drei Arten paralleler Strahlen zu den Primärfarben rot, grün bzw. blau gehören.

2. Farbbild-Projektionsanzeigevorrichtung nach Anspruch 1, bei der die Unterlinsen (7R, 7B, 7G) plankonvexe Linsen (7R, 7G, 7B) enthalten, die so angeordnet sind, daß ihre ebenen Flächen einer jeweiligen Anzeigeflächen einer jeweiligen Anzeigetafel (6R, 6G, 6B) zugewandt sind, um von der Lichterzeugungseinrichtung (1) her einfallendes Licht zu empfangen.

3. Farbbild-Projektionsanzeigevorrichtung nach Anspruch 1 oder Anspruch 2, bei der die Zusammensetzeinrichtung (8M, 8G, 8B) zwei dichroitische Spiegel (8G, 8B) und einen Spiegel (8M) ohne Wellenlängen-Selektivität aufweist.

4. Farbbild-Projektionsanzeigevorrichtung nach einem der Ansprüche 1 bis 3, bei der jede Mikrolinsenanordnung (5R, 5G, 5B) parallel zur jeweiligen Anzeigetafel (6R, 6G, 6B) ist und das Licht unter einem Winkel in bezug auf die Normale einer jeweiligen Anzeigetafel (6R, 6G, 6B) auf das Mikrolinsenarray (5R, 5G, 5B) fällt.

5. Farbbild-Projektionsanzeigevorrichtung nach einem der vorstehenden Ansprüche, bei der die Einrichtung (4R, 4B, 4M) zum Aufteilen der parallelen Lichtstrahlen in drei Arten paralleler Lichtstrahlen zwei dichroitische Spiegel (4R, 4B) enthält, die der jeweiligen Anzeigetafel (6R, 6G, 6B) rotes, grünes bzw. blaues Licht zuführen.

## Revendications

1. Dispositif d'affichage d'images en couleur du type par projection, comprenant: trois panneaux d'affichage (6R, 6G, 6B); des moyens de génération de lumière (1, 3, 11) pour générer des rayons de lumière parallèles; des moyens (4R, 4B, 4M) pour séparer les rayons de lumière parallèles en trois types de rayons de lumière parallèles et pour diriger les rayons séparés vers chaque panneau d'affichage respectif (6R, 6G, 6B); un premier groupe de lentilles comprenant des sous-lentilles (7R, 7G, 7B) pour faire converger en un point des rayons de lumière provenant d'un panneau d'affichage respectif (6R, 6G, 6B) et des moyens de composition (8M, 8G, 8B) pour composer une image; et un second groupe de lentilles (9) disposé à proximité dudit point pour projeter l'image composée sur un écran, caractérisé par un réseau de micro-lentilles (5R, 5G, 5B) incluant plusieurs micro-lentilles disposées au-dessus d'une surface d'incidence de chacun des panneaux d'affichage (6R, 6G, 6B), chaque micro-lentille ayant un point focal et faisant converger les rayons de lumière parallèles sur son point focal afin de faire passer la lumière à travers une ouverture correspondante d'un élément d'image d'un panneau d'affichage (6R, 6G, 6B), dans lequel les sous-lentilles ont une surface plus grande que celle du panneau d'affichage respectif (6R, 6G, 6B), et la surface de la pupille d'entrée du second groupe de lentilles (9) est égale ou supérieure à la surface de lumière qui est projetée sur celle-ci par une micro-lentille respective, et dans lequel les trois types de rayons parallèles ont respectivement des couleurs primaires rouge, verte et bleue.

2. Dispositif d'affichage d'images en couleur du type par projection selon la revendication 1, dans lequel les sous-lentilles (7R, 7B, 7G) comprennent des lentilles planes-convexes (7R, 7G, 7B) agencées avec leurs côtés plats faisant face à un panneau d'affichage respectif (6R, 6G, 6B) de façon à recevoir une lumière incidente provenant des moyens de génération de lumière (1).

3. Dispositif d'affichage d'images en couleur du type par projection selon la revendication 1 ou la revendication 2, dans lequel les moyens de composition (8M, 8G, 8B) comprennent deux miroirs dichroïques (8G, 8B) et un miroir (8M) sans sélectivité des longueurs d'onde.

4. Dispositif d'affichage d'images en couleur du type par projection selon l'une quelconque des revendications 1 à 3, dans lequel chaque réseau de micro-lentilles (5R, 5G, 5B) est parallèle à un panneau d'affichage respectif (6R, 6G, 6B) et la lumière est incidente sur le réseau de micro-lentilles (5R, 5G, 5B) suivant un angle par rapport à la normale à un panneau d'affichage respectif (6R, 6G, 6B).

5. Dispositif d'affichage d'images en couleur du type par projection selon l'une quelconque des revendications précédentes, dans lequel les moyens (4R, 4B, 4M) pour séparer les rayons de lumière parallèles en trois types de rayons de lumière parallèles comprennent deux miroirs dichroïques (4R, 4B) qui fournissent des lumières rouge, verte et bleue respectivement à chacun des panneaux d'affichage respectifs (6R, 6G, 6B).
